# EUROPEAN PATENT APPLICATION

(11) **EP 0 601 310 A1**
(43) Date of publication of application: **15.06.1994**
(21) Application number: 93116726.6
(22) Date of filing: 15.10.1993
(51) Int. Cl.: G02B 26/02, H04B 10/20

(54) **Optical line connector and optical loop wiring**

(30) Priority: 01.12.1992 JP 345341/92
(71) Applicant: SUMITOMO ELECTRIC INDUSTRIES, LTD, Osaka-shi, Osaka-fu 541 (JP); NIPPON TELEGRAPH AND TELEPHONE CORPORATION, Tokyo (JP)
(72) Inventor: Sano, Hiroaki, c/o Yokohama Works of Sumitomo, Sakae-ku, Yokohama-shi, Kanagawa (JP); Tanaka, Shigeru, c/o Yokohama Works of Sumitomo, Sakae-ku, Yokohama-shi, Kanagawa (JP); Suzuki, Hisashi, 2-chome, Mito-shi, Ibaraki (JP)
(74) Representative: Grünecker, Kinkeldey, Stockmair & Schwanhäusser Anwaltssozietät

(57) **Abstract**

An optical line connector by which even when an equipment-side connector (5) is not connected, an optical loop is closed, and the other equipments provided in the same loop can operate without any problem. A movable waveguide (1) is movable right and left in a direction of an arrow to connect line-side optical fibers (2a,2b) to a U-shaped internal waveguide (1b), thereby forming an optical loop. In response to the connection of an equipment-side connector (5) to a connector-side connector (4), the movable waveguide is moved right to connect the line-side optical fibers to connector-side optical fibers. By disconnecting the equipment-side connector, the movable waveguide is automatically returned, and therefore the optical loop will not be opened.

## Description

### BACKGROUND OF THE INVENTION

This invention relates to an optical line connector capable of selecting a connection of an optical line wiring installed in a house, a building or the like, and also relates to an optical line wiring, as well as an optical line wiring method, using such a device.

An optical receptacle is known as a device for connecting an optical line wiring installed in a house, a building or the like. In this receptacle, an optical connector of a single- or a two-cores type is mounted on a wall within a room, and a mating optical plug is connected to the optical connector to connect optical fibers together.

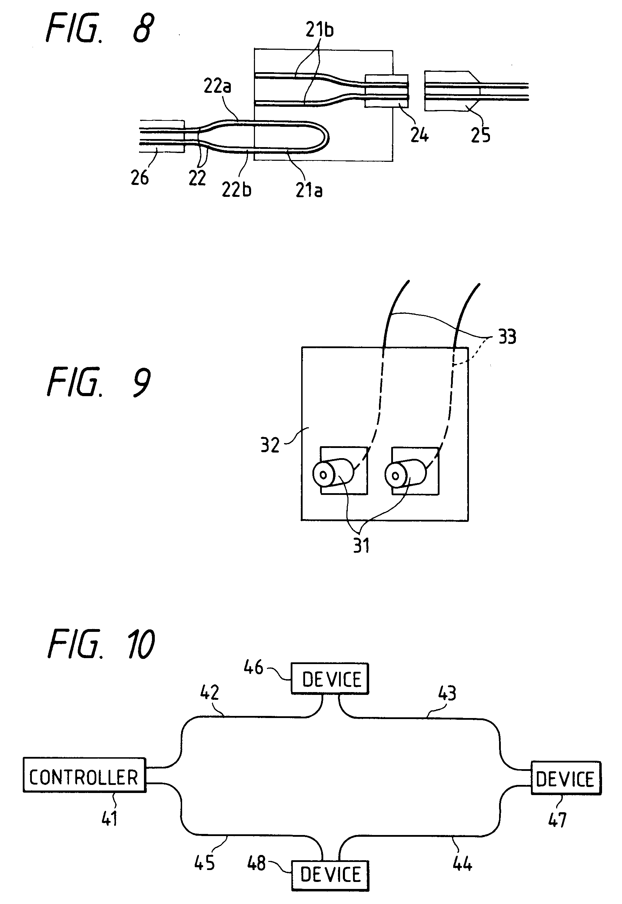

Fig. 9 shows one example of optical connector fixedly mounted on a member on a wall surface. In this Figure, reference numeral 31 denotes an optical connector; reference numeral 32, a mounting plate; and reference numeral 33, an optical fiber. In this example, the optical connectors are of a single-core type, and are mounted on the mounting plate 32 on the wall surface within a room. Optical fibers 33 from an optical fiber cable (not shown) are connected to the optical connectors 31, respectively. An optical plug connected to an end of an optical fiber connected to an equipment within the room is connected to the optical connector 31, thereby connecting an optical fiber wiring.

On the other hand, one example of optical line wiring method is a loop-type wiring for effecting a bi-directional communication or a communication between equipments. One such example is described on pages 2 and 3 of "Aiming at Creation of Intelligent Building" published by Japan Telecommunication Corporation. Generally, in this system as shown in Fig. 10, a line from a controller 41 is so arranged to form a loop as at 42, 43, 44 and 45, and this loop-like line is opened at portions thereof, and equipments 46, 47 and 48 are provided at these open portions, respectively. Each of the equipments provided in the loop-like line takes only those signals that it requires, and other signals are passed through it to the subsequent equipments. The controller 41 effects a communication control. There is also known a ring-like line wiring, in which a line is arranged in the form of a loop as in the loop-like line wiring, but the controller 41 is not used. In this case, the communication is controlled at each terminal.

When an optical connector as described in Fig. 9 is used in the equipments connected to the loop, and when the equipment is removed to be disconnected therefrom, there is encountered a problem that the line is opened there, so that the loop-like line is interrupted.

### SUMMARY OF THE INVENTION

The present invention has been made to overcome the above problem, and an object of the invention is to provide an optical line connector by which even when a connector connected to an equipment is not connected, a loop of an optical line is kept closed, and the other equipments in the same loop can operate without any problem.

According to the invention, there is provided an optical line connector including a pair of two line-side waveguides, a pair of two connector-side waveguides, a connector-side connector connected to the connector-side waveguides, and a connection waveguide which has internal waveguides therein, and is disposed in facing to the line-side waveguides and the connector-side waveguides, and is movable relative thereto, wherein by connecting an equipment-side connector to the connector-side connector, the connection waveguide is relatively moved to a first position, so that the line-side waveguides are connected to the connector-side waveguides through the connection waveguide; and by disconnecting the equipment-side connector from the connector-side connector, the connection waveguide is relatively moved to a second position, so that the line-side waveguides are connected by the connection waveguide.

Furthermore, there is provided an optical loop wiring characterized in that the optical line connector in any one of the above-mentioned in a loop.

With the use of the above-mentioned optical line connector, when the equipment-side connector is not connected, the loop of the optical line is closed, and equipments provided on the same loop can be operated without any problem. When the equipment-side connector is connected, the connection waveguide is relatively moved by the pushing of the connector, and the moved connection waveguide is held against movement to open the loop of the optical line, and the equipment is connected in the loop. Therefore, the equipment is connected to the optical line cable. As a result, the optical line network can form a loop regardless of whether or not the equipment is connected, that is, regardless of whether or not the equipment-side connector is connected, and therefore the operation of the optical loop network will not be affected.

### BRIEF DESCRIPTION OF THE DRAWINGS

Fig. 1 is a schematic view showing a main portion of a basic construction of one preferred embodiment of an optical line connector of the present invention;
Figs. 2A and 2B are views explanatory of the operation of the optical line connector of Fig. 1;
Figs. 3A and 3B are views explanatory of examples of connection between the connector-side connector and the equipment-side connector;
Figs. 4A and 4B are views explanatory of examples of method of limiting the position of the movable waveguide;
Figs. 5A and 5B is a view explanatory of another example of method of limiting the position of the movable waveguide;
Fig. 6 is a view explanatory of another example of internal waveguides in the movable waveguide;
Fig. 7 is a view explanatory of another embodiment of an optical line connector of the present invention;
Fig. 8 shows a modification of the movable waveguide of Fig. 7;
Fig. 9 shows one example of conventional optical connector; and
Fig. 10 shows conventional optical line wiring.

### DETAILED DESCRIPTION OF PREFERRED EMBODIMENTS

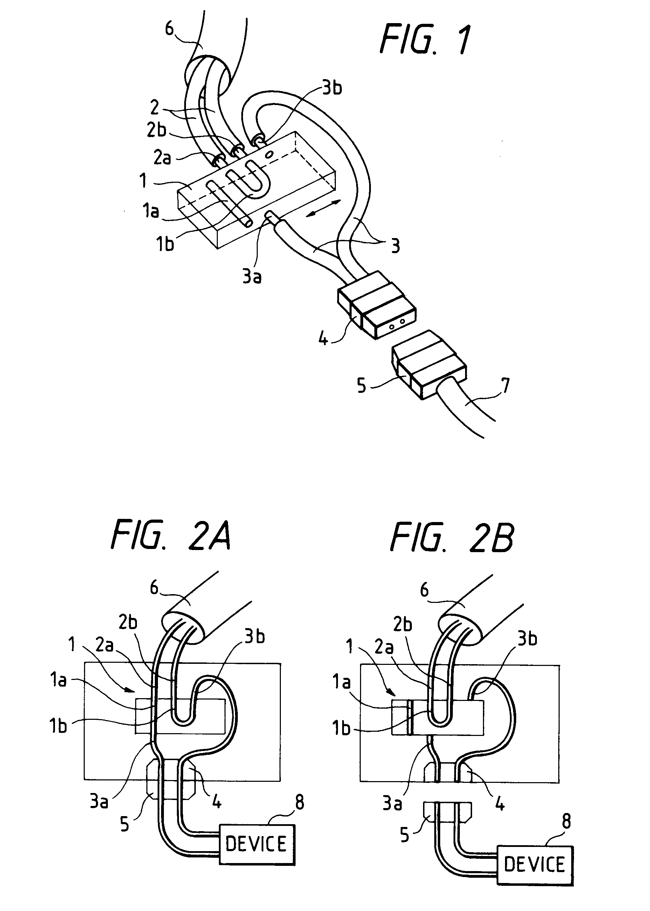

Fig. 1 is a schematic view showing a main portion of a basic construction of one preferred embodiment of an optical line connector of the present invention. In Fig. 1, reference numeral 1 denotes a movable waveguide; reference numerals 1a and 1b, internal waveguides; reference numeral 2, a line-side optical fiber; reference numeral 2a and 2b, an end portion of the line-side optical fiber; reference numeral 3, a connector-side optical fiber; reference numeral 3a and 3b, an end portion of the connector-side optical fiber; reference numeral 4, a connector-side connector; reference numeral 5, an equipment-side connector; reference numeral 6, a line cable; and reference numeral 7, an equipment-side cable. The movable waveguide 1 comprises a plate made of, for example, silica glass, and has two optical paths of a high refractive index which serve as the internal waveguides 1a and 1b which are, for example, embedded waveguides. In this embodiment, the internal waveguide la is formed into a linear configuration whereas the internal waveguide 1b is formed into a U-shape. The line cable 6 constitutes a loop-like line as described in Fig. 10, and has a pair of line-side optical fibers 2. The end portions 2a and 2b of the line-side optical fibers are disposed in facing to the movable waveguide 1, and are bonded and fixed to respectively to fixing grooves in a base (not shown). The end portions 3a and 3b of the pair of connector-side optical fibers 3 are disposed in facing to the movable waveguide 1, and are bonded and fixed respectively to fixing grooves in the base (not shown). The movable waveguide 1 has the internal waveguides 1a and 1b, and the connector-side connector 4 is connected to the other side of the movable waveguide 1. The connector device-side connector 4 is mounted on a housing (not shown). The equipment-side connector 5 is connected to the equipment-side cable 7 connected to an equipment.

The movable waveguide 1 is movable right and left in a direction of an arrow to switch the optical line, and can be located at two positions, depending on the connection of the equipment-side connector 5. In this embodiment, the movable waveguide is moved through a cam mechanism by a force produced when pushing the equipment-side connector 5.

Figs. 2A and 2B are views explanatory of the operation of the optical line connector of Fig. 1. Fig. 2A shows a condition in which the equipment is connected, and Fig. 2B shows a condition in which the equipment is disconnected. In these Figures, the same portions as those in Fig. 1 are designated by the same reference numerals, respectively, and explanation thereof is omitted. Reference numeral 8 denotes the equipment.

For connecting the equipment as shown in Fig. 2A, the equipment-side connector 5 is connected to the connector-side connector 4, so that the movable waveguide 1 is moved into the position shown in Fig. 2A. In this position, the end portion 2a of the line-side optical fiber is connected to the end portion 3a of the connector-side optical fiber by the internal waveguide 1a. Also, the end portion 2b of the line-side optical fiber is connected to the end portion 3b of the connector-side optical fiber by the internal waveguide 1b. As a result, there is formed the optical line passing through the equipment 8.

For disconnecting the equipment 8 as shown in Fig. 2B, the equipment-side connector 4 is disconnected, so that the movable waveguide 1 is automatically returned to the illustrated position by an urging force of a spring or the like (not shown). In this position, the line-side optical fiber end portions 2a and 2b are interconnected by the U-shaped internal waveguide 1b, and light emitted from the line-side optical fiber end portion 2a of the line cable 6 is fed through the internal waveguide 1b of the movable waveguide 1 to the end portion 2b of the other line-side optical fiber. As a result, there is formed the optical line in which the end of the optical line 6 is closed, as shown in this Fig. 2B.

Thus, in the disconnected condition of the equipment 8, the line network is closed in a loop-like manner, and in the connected condition of the equipment 8, the line is opened so that the equipment can be connected to the loop.

Although the line-side optical fibers 2 and the connector-side optical fibers 3 are disposed in opposed relation to the movable waveguide 1, the line-side optical fibers may be optically connected to the connector not by the optical fibers but by any other suitable optical means such as an embedded waveguide as in the movable waveguide.

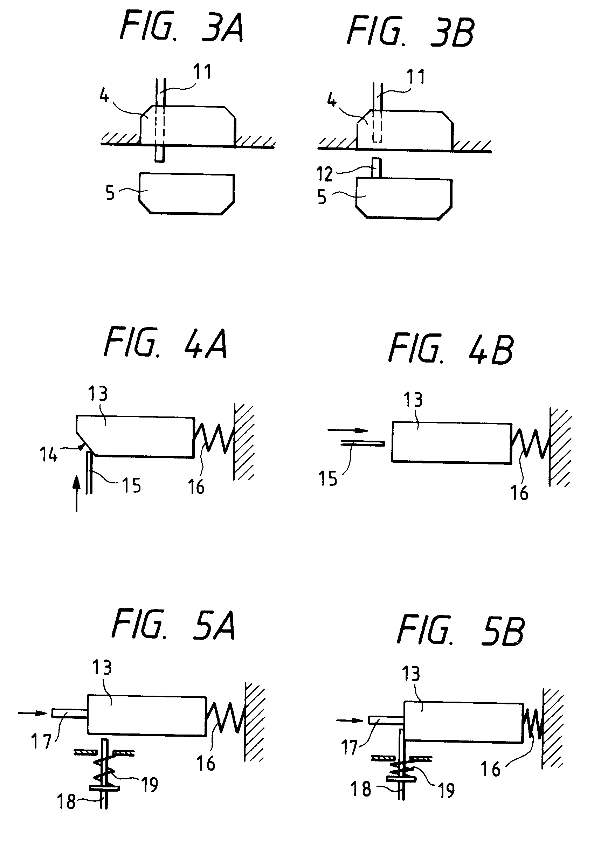

Figs. 3A and 3B are views explanatory of examples of connection between the connector-side connector 4 and the equipment-side connector 5. In this Figure, reference numeral 4 denotes the connector-side connector; reference numeral 5, the equipment-side connector; reference numeral 11, an operating member; and reference numeral 12, a projection. The connector-side connector 4 is mounted on the housing as described above, and the bar-like operating member 11 is slidably mounted on this connector. In the example of Fig. 3A, upon connection of the equipment-side connector 5, the operating member 11 is pushed and moved by an abutment surface of the equipment-side connector 5. In the example of Fig. 3B, the operating member 11 is pushed and moved by the projection 12 mounted on the equipment-side connector 5. The operating member 11 is moved by the force produced when connecting the equipment-side connector 5, so that the position of the movable waveguide can be limited as described later.

In the present invention, it will suffice that the force, produced when connecting the equipment-side connector to the connector-side connector, is utilized. Therefore, the invention is not limited to the moving mechanism using the bar-like operating member or the like. Any other suitable motion mechanism, such as an angular motion mechanism and a gear mechanism, can be used.

Figs. 4A and 4B are views explanatory of examples of method of limiting the position of the movable waveguide. In this Figure, reference numeral 13 denotes a movable waveguide support member, reference numeral 14 a cam surface, reference numeral 15 a drive member, and reference numeral 16 a spring member. The movable waveguide support member 13 supports the above-mentioned movable waveguide, and is movable right and left through a suitable guide member.

In Fig. 4A, the cam surface 14 is formed on the movable waveguide support member 13. The movable waveguide support member 13 is urged left (in the drawings) by the spring member 16. When the operating member 11 shown in Fig. 3 is pushed, the drive member 15 is moved upward (in the drawings) through a link mechanism, and is brought into engagement with the cam surface 14 to move the movable waveguide support member 13 in the right-hand direction. As a result of this movement, the movable waveguide connects the equipment to the loop, as shown in Fig. 2A. When the equipment-side connector is disconnected, the movable waveguide support member 13 is returned in the left-hand direction by the restoring force of the spring member 16. As a result, the condition shown in Fig. 2B is automatically obtained, and the movable waveguide closes the loop.

In the example of Fig. 4B, the drive member 15 pushes a side surface of the movable waveguide support member 13. As in Fig. 4A, by connection and disconnecting the equipment-side connector, the conditions shown in Fig. 2 can be achieved.

Figs. 5A and 5B are views explanatory of another example of method of limiting the position of the movable waveguide. In this Figure, reference numeral 13 denotes a movable waveguide support member, reference numeral 17 a push member, reference numeral 18 a limiting member, and reference numerals 16 and 19 spring members. As in Figs. 2A and 2B, the movable waveguide support member 13 supports the above-mentioned movable waveguide, and is movable right and left through a suitable guide member.

Fig. 5A shows a disconnected condition of the equipment-side connector. In this condition, the movable waveguide support member 13 is urged left by the spring member 16, and since the limiting member 18 is abutted against a portion of the movable waveguide support member 13, the operating member 11 (Figs. 3A and 3B) movable in synchronism with the limiting member 18 can not move. Therefore, the equipment-side connector 5 can not be connected. In this condition, the movable waveguide closes the loop, as described in Fig. 2B. For connecting the equipment-side connector, the push member 17 mounted on the movable waveguide support member 13 is pushed, and in this condition the connection is made. By connecting the equipment-side connector, the limiting member 18 moves into a path of movement of the movable waveguide support member 13, thereby preventing the movable waveguide support member 13 from being returned, as shown in Fig. 5B. In this condition, the equipment is connected to the loop by the movable waveguide, as shown in Fig. 2A. When the equipment-side connector is disconnected, the limiting member 18 is returned by the spring member 19, and the movable waveguide support member 13 is returned left by the restoring force of the spring member 16, so that the condition shown in Fig. 5A is automatically obtained, and the movable waveguide closes the loop as shown in Fig. 2B.

In the above embodiments, although the link member is provided between the operating member and the drive member, the operating member and the drive member may be formed by a common member, thereby omitting the use of the link mechanism.

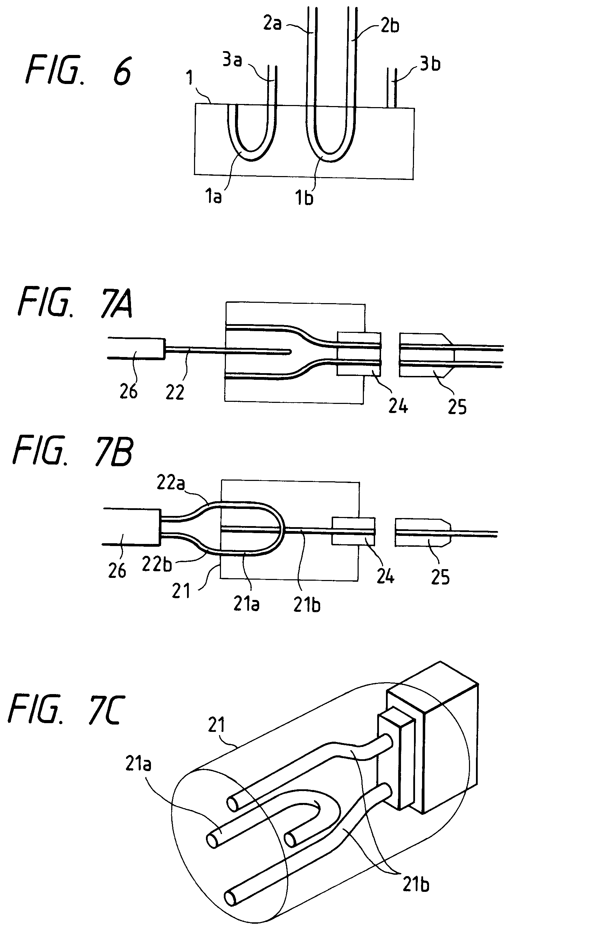

Fig. 6 is a view explanatory of another example of internal waveguides in the movable waveguide. In this Figure, those portions corresponding to those in Fig. 1 are designated by the same reference numerals, respectively, and explanation thereof is omitted. In this embodiment, internal waveguides la and 1b are both of a U-shape. End portions 2a and 2b of line-side optical fibers and end portions 3a and 3b of equipment-side optical fibers can be provided on the same side.

Figs. 7A to 7C are views explanatory of another embodiment of an optical line connector of the present invention. Fig. 7A is a side-elevational view, Fig. 7B is a front-elevational view, and Fig. 7C is a perspective view showing the interior of a movable waveguide. In these Figures, reference numeral 21 denotes a movable waveguide, reference numerals 21a and 21b internal waveguides, reference numeral 22 line-side optical fiber, reference numeral 22a, 22b an end portion of the line-side optical fiber, reference numeral 24 a connector-side connector, reference numeral 25 an equipment-side connector, and reference numeral 26 a line cable. The movable waveguide may be constituted by optical fibers, and the U-shaped internal waveguide 21a and the two internal waveguides 21b connected to the connector-side connector 24 are arranged at apexes of a square. The two line-side optical fibers 22 of the line cable 26 are spaced from each other a distance equal to the diagonal line of this square, and by rotating the movable waveguide 21 through 90°, the connection is switched between a condition in which the line-side optical fiber end portions 22a and 22b are connected to the U-shaped internal waveguide 21a and a condition in which the end portions 22a and 22b are connected to the internal waveguides 21b connected to the equipment-side connector 24. This switching is automatically effected by connecting an equipment-side connector (not shown) to the connector-side connector 24.

Fig. 8 shows a modification of the movable waveguide of Fig. 7, in which the movable waveguide is formed into a plate-like configuration as in the embodiment of Fig. 1. Portions corresponding to those of Fig. 7 are designated by the same reference numerals, respectively, and explanation thereof is omitted.

In the above embodiments, the movable waveguide is adapted to be moved; however, it is only necessary to change the position by relative movement, and therefore the movable waveguide may be fixed, in which case the other waveguides are movable. Alternatively, both may be movable.

As described above, with the use of the optical line connector of the present invention, the optical equipment can be put into and out of the network without affecting the construction of the loop-like optical line wiring. Accordingly, if the optical line connectors according to the invention are installed in advance on walls and/or floors of the buildings or premises of equipments arrangement undetermined, it is advantageous that it can deal with requirement of more equipments or change of arrangement.

Furthermore, if the optical line connectors according to the invention and the optical cable wiring are installed in the home, it is advantageous that it can easily deal with requirement to establish new equipments.

## Claims

1. An optical line connector comprising:
a pair of two line-side waveguides;
a pair of two connector-side waveguides;
a connector-side connector connected to said connector-side waveguides; and
a connection waveguide means which has internal waveguides therein, and is disposed in facing to said line-side waveguides and said connector-side waveguides, and is movable relative thereto;
wherein said connection waveguide means is relatively moved to a first position when an equipment-side connector is coupled with said connector-side connector, so that said line-side waveguides are connected to said connector-side waveguides through said connection waveguide means; and
said connection waveguide means is relatively moved to a second position when said equipment-side connector is disconnected from said connector-side connector, so that the pair of said line-side waveguides are connected by said connection waveguide means.

2. An optical line connector as claimed in claim 1, wherein said connection waveguide means is held at the first position to allow said equipment-side connector to couple with said connector-side waveguide.

3. An optical line connector as claimed in claim 1, wherein said connection waveguide means incudes first internal waveguide and second internal waveguide, and at the first position said line-side waveguides are connected with said connector-side waveguides by said first and second internal waveguides, respectively, whereas at the second position said line-side waveguides are connected each other by one of said first and second internal waveguides.

4. An optical line connector as claimed in claim 3, wherein at least one of said first and second internal waveguide is U-shaped.

5. An optical line connector as claimed in claim 3, wherein both of said first and second internal waveguide are U-shaped.

6. An optical line connector as claimed in claim 1, further comprising a positioning mechanism for positioning said connection waveguide means.

7. An optical line connector as claimed in claim 6, wherein said positioning mechanism including support member for said connection waveguide means, cam member, driving member, spring member and restriction member.

8. An optical line connector as claimed in claim 1, wherein said connection waveguide means includes one U-shaped internal waveguide and two internal waveguides connected to the connector-side connector in such manner that ends of the internal waveguides to be formed as apexes of a square, and wherein said line-side waveguides are spaced from each other a distance equal to a diagonal line of the square, and wherein said connection waveguide means is rotated by 90° to switch connection and disconnection between the line-side waveguides and the connector-side waveguides.

9. An optical loop wiring in which optical lines are connected by an optical line connector comprising:
a pair of two line-side waveguides;
a pair of two connector-side waveguides;
a connector-side connector connected to said connector-side waveguides; and
a connection waveguide means which has internal waveguides therein, and is disposed in facing to said line-side waveguides and said connector-side waveguides, and is movable relative thereto;
wherein said connection waveguide means is relatively moved to a first position when an equipment-side connector is coupled with said connector-side connector, so that said line-side waveguides are connected to said connector-side waveguides through said connection waveguide means; and
said connection waveguide means is relatively moved to a second position when said equipment-side connector is disconnected from said connector-side connector, so that the pair of said line-side waveguides are connected by said connection waveguide means.
